(19) Europäisches Patentamt
European Patent Office
Office européen des brevets

(11) EP 2 674 893 A2

(12) EUROPEAN PATENT APPLICATION

(43) Date of publication:
18.12.2013 Bulletin 2013/51

(51) Int Cl.:
G06K 9/00 (2006.01)          G06K 9/20 (2006.01)

(21) Application number: 13171342.2

(22) Date of filing: 11.06.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 15.06.2012 JP 2012135869
24.04.2013 JP 2013091430

(71) Applicant: Ricoh Company, Ltd.
Tokyo 143-8555 (JP)

(72) Inventor: Xue, Li
Tokyo 143-8555 (JP)

(74) Representative: Schwabe - Sandmair - Marx
Patentanwälte
Stuntzstraße 16
81677 München (DE)

(54) **Travelable area recognition system, travelable area recognition method, travelable area recognition program executed on the travelable area recognition system, and recording medium storing travelable area recognition program**

(57)     A travelable area recognition system (1) and a travelable area recognition method, installed in a moving body (100) for traveling on a travelable area, operatively connected to multiple imaging devices (110A, 110B) that capture multiple images of the area surrounding the moving body (100), to recognize a travelable image area in the captured image, each of which includes indexed image generator (122A, 122B) to generate multiple indexed images from the multiple captured images acquired by the imaging devices (110A, 110B) installed in the moving body (100), the indexed images having pixels corresponding to indexes calculated based on multiple polarization components having different polarization directions respectively; a parallax calculator (121) to calculate parallaxes for each of the pixels, based on the indexed images generated by the indexed image generators (122A, 122B) from the multiple captured images; and a travelable area recognition processor (142) to recognize the travelable image area based on the parallaxes calculated by the parallax calculator (121).

FIG. 1

**Description**

BACKGROUND

Technical Field

The present disclosure relates to a travelable area recognition system, installed in a moving body, to recognize a travelable area on which the moving body is driving, based on a captured image acquired by an imaging device installed in the moving body, and a travelable area recognition method, a travelable area recognition program, and a recording medium storing the travelable area recognition program.

Related Art

Various types of object recognition process may be applied to a range-finding system, which may be provided for moving body control systems that control moving bodies, such as vehicles, ships, or airplanes, or information providing systems that provide useful information to the driver in the moving body.

For example, the object recognition processing may be applied to driver assist systems, such as adaptive cruise control (ACC), to reduce the burden on the driver. The driver assist systems provide various functions, including an automatic brake-control function or alert function, which alerts the driver to take corrective action to avoid a collision or reduce the impact of the collision, a driving speed adjustment function to maintain a safe minimum distance between vehicles, and a stray prevention function to prevent the vehicle from straying into another lane. In order to implement the driver assist system, it is desired to analyze a captured image obtained through capturing surroundings of the vehicle to accurately detect a distance to an obstacle in the way of the vehicle.

Japanese Patent Application Publication No. JP 2011-085539-A discloses a range-finding camera apparatus that calculates polarized ratio image data (indexed value image data) based on polarized image data acquired by two imaging devices, and generates parallax image data having parallax information of the calculated polarized image. This range-finding camera apparatus analyzes the parallax image data to detect a distance to the obstacle.

In addition, the normal range finding camera system generates the parallax image based on two luminance images acquired by two imaging device. The above-example range-finding camera apparatus generates the parallax image based on two polarization ratio images, which differs from the range finding camera system that generates the parallax image based on two luminance images acquired by two imaging devices. In order to generate the parallax image, it is necessary to perform the matching process. In the matching process, the position of an image area (parallax difference calculation target area) is specified in one of the images (reference image) captured by two imaging device, and the image area (corresponding area) having the position that corresponds to the image area having the specified position is specified in the other one (a comparison image) of the images.

The matching process is the process, which identifies the corresponding area in the comparison image, which matches the pixel value characteristics in the image area (parallax calculation corresponding area) in the reference image, or which has the pixel value characteristics included in a predetermined vicinity area of the image area in the reference image. To identify the appropriate corresponding area in this matching process, it is desirable to select the image area such that the image area has pixel value distribution having specific characteristics.

In the known range-finding camera system that generates the parallax image based on the luminance image, when the imaging area is dark such that the luminance difference can be hardly obtained in the luminance image, distribution in pixel value (luminance image value) will be similar through many areas in the luminance image. Accordingly, suitable matching process cannot be performed, and appropriate parallax image cannot be generated.

On the contrary, in the range-finding camera system that generates the parallax image based on the polarized image such as the camera apparatus described in JP2011-085539-A, even though the captured area is dark and the sufficient luminance difference cannot be acquired, distribution in polarization components of a light incident to the imaging device may have characteristics.

In this case, distribution in pixel value (polarized ratio) having characteristics may be observed, in the polarized ratio image. Therefore, in the matching process, the accuracy in specifying the corresponding image area, which corresponds to the image area set in the reference image, is improved. As a result, the matching process is accurately performed, thus generating a parallax image with improved accuracy.

SUMMARY

In order to provide various functions in the driver assist system, it is important to analyze a captured image obtained through capturing surroundings of the vehicle, and to accurately detect a road surface image area (travelable surface image area) showing the road surface on which the vehicle can drive. The inventor of the present disclosure has realized that, by using the parallax calculated based on the index value image as the reference image or the comparison image, an image of the travelable surface area showing the travelable surface on which the moving body such as the vehicle can drive can be recognized with a high degree of accuracy. The index value image may be, for example, a polarized ratio image having the pixel values corresponding to the index values such as the polarized ratios, which are calculated based on a plurality of polarization components that respectively have different polarization directions.

In JP 2011-085539-A, the hardware configuration or the processing, which achieves generation of the parallax image based on the two polarized ratio images captured by the two imaging devices, is described. JP 2011-085539-A further discloses that the road shape is detected based on various types of image data. However, it fails to disclose how the road shape is detected from what type of image data.

In view of the above, it is a general object of the present invention to provide a travelable area recognition system, a travelable area recognition method, a travelable area recognition program, and a recording medium storing the program, each of which is capable of recognizing the travelable surface image area with improved accuracy.

In order to achieve the above-mentioned object, according to one aspect of the present disclosure, there is provided a travelable area recognition system (1) installed in a moving body (100) for traveling on a travelable area and operatively connected to multiple imaging devices (110A, 110B) that capture multiple images of the area surrounding the moving body (100), and configured to recognize a travelable image area in the captured image. The travelable area recognition system (1) includes multiple indexed image generators (122A, 122B), a parallax calculator (121), and a travelable area recognition processor (142). The multiple indexed image generators (122A, 122B) generate multiple indexed images from the multiple captured images acquired by the imaging devices (110A, 110B) installed in the moving body (100), the indexed images having pixels corresponding to indexes calculated based on multiple polarization components having different polarization directions respectively. The parallax calculator (121) calculates parallaxes for each of the pixels, based on the indexed images generated by the indexed image generators (122A, 122B) from the multiple captured images. The travelable area recognition processor (142) recognizes the travelable image area based on the parallaxes calculated by the parallax calculator (121).

In another aspect of the present disclosure, there is provided a travelable area recognition method executed by the above-described travelable area recognition system (1).

In yet another aspect of the present disclosure, there is provided a travelable area recognition program to instruct the above-described travelable area recognition system (1) to perform the travelable area recognition method.

In yet another aspect of the present disclosure, there is provided a recording medium storing the travelable area recognition program.

BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:

FIG. 1 is a schematic diagram illustrating an in-vehicle control system including a road area recognition system, according to the present disclosure;
FIG. 2 is a diagram illustrating a configuration of an imaging unit and an image analysis unit shown in FIG. 1;
FIG. 3 is a schematic expanded view illustrating optical filters shown in FIG. 2 viewed from a direction orthogonal to a direction through light passes;
FIG. 4 is an illustration of dividing pattern of the optical filters shown in FIG. 3;
FIG. 5 is a functional block diagram illustrating a road area recognition system (travelable area recognition system) according to the present disclosure;
FIG. 6 is a flow chart illustrating operation of recognizing a travelable area executed by the road area recognition system shown in FIG. 5;
FIG. 7A is one example of parallax distribution in a parallax image;
FIG. 7B is a linear parallax distribution map (V map) representing line-by-line frequency distribution of parallaxes in the parallax image;
FIG. 8(a) is a schematic illustration of an example of a captured image (luminance image) acquired by an imaging device;
FIG. 8(b) is a graph illustrating the straight line approximation of the pixel distribution on the line parallax distribution map (V map) based on frequency distribution of the parallaxes for each line calculated by a parallax histogram calculator;
FIG. 9 is a flow chart illustrating a process executed by a lane marker recognition processor shown in FIG. 5;
FIG. 10 is a flow chart illustrating a process executed by a road area recognition processor shown in FIG. 5;

FIG. 11 is an illustration for explaining process of the road area recognition corresponding to a first example of a white line recognition result;

FIG. 12 is an illustration for explaining process of the road area recognition corresponding to a second example of a white line recognition result;

FIG. 13A an illustration for explaining process of the road area recognition corresponding to a third example of a white line recognition result in a case in which edges of two white lines are accurately extracted in a previously captured image (frame);

FIG. 13B an illustration for explaining process of the road area recognition corresponding to the third example of the white line recognition result in a case in which the edges of two white lines are not accurately extracted in a presently captured image;

FIG. 14A is an illustration for explaining process of the road area recognition corresponding to a fourth example of a white line recognition result in a case in which the edges of the white lines are not accurately extracted in a previously captured image (frame);

FIG. 14B is an illustration for explaining process of the road area recognition corresponding to the fourth example of the white line recognition result when the edges of white lines are not accurately extracted in a presently captured image;

FIG. 15A is an illustration for explaining process of the road area recognition corresponding to a firth example of a white line recognition result in a case in which edges of two continuous white lines are accurately extracted in a previously captured image;

FIG. 15B is an illustration for explaining process of the road area recognition corresponding to the fifth example of the white line recognition result in a case in which edges of two white intermittent lines are accurately extracted in a presently captured image;

FIG. 16A is an illustration for explaining process of the road area recognition corresponding to a sixth example of a white line recognition result in a case in which edges of two continuous white lines are accurately extracted in a presently captured image; and

FIG. 16B is an illustration for explaining process of the road area recognition corresponding to the sixth example of the white line recognition result in a case in which a part of edges of two continues white lines are not accurately extracted in a previously captured image.

## DETAILED DESCRIPTION

In describing preferred embodiments illustrated in the drawings, specific terminology is employed for the sake of clarity. However, the disclosure of this patent specification is not intended to be limited to the specific terminology so selected, and it is to be understood that each specific element includes all technical equivalents that have the same function, operate in a similar manner, and achieve a similar result.

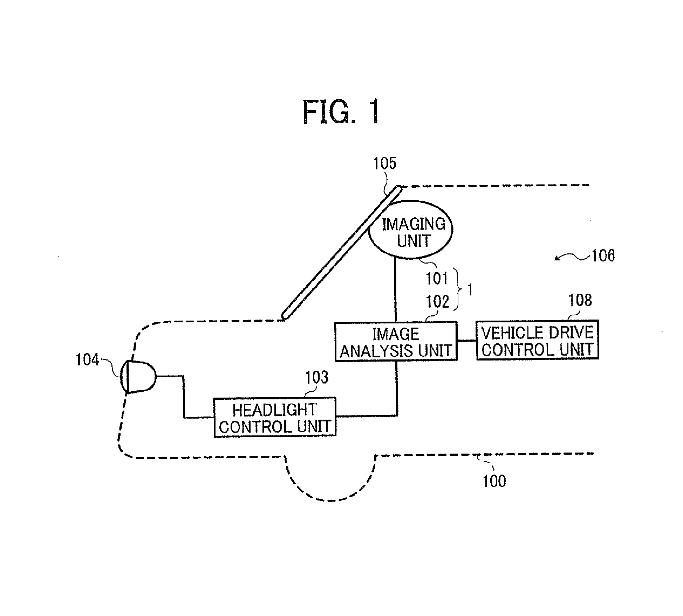

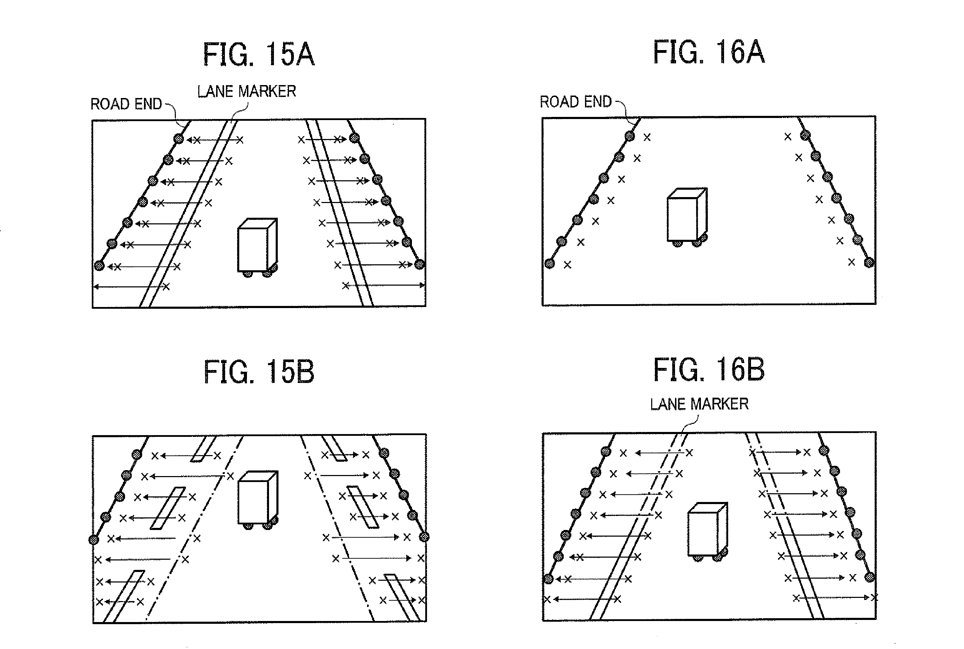

Referring now to the drawings, wherein like reference numerals designate identical or corresponding parts throughout the several views thereof, and particularly to FIGS. 1 through 16B, a travelable area (road area) recognition system according to illustrative embodiments of the present disclosure is described.

In the following examples, the road area recognition system is described as one example of a travelable surface recognition system. It is to be noted that, the travelable area recognition system according to the present disclosure is not limited to be used for the in-vehicle mount control system, such that the travelable area recognition system may be used, for example, for any desired system provided with an object detection device that detects the object based on captured images.

FIG. 1 is a schematic diagram illustrating an in-vehicle mount control system 106 including a road area recognition system 1, according to a present disclosure. The in-vehicle mount control system 106 controls various devices in a vehicle 100 in accordance with a recognition result of the travelable area, which is obtained using the captured image of an area ahead of the vehicle in a direction of travel that is acquired by an imaging unit 101 installed in the vehicle 100 such as a car.

In FIG. 1, the in-vehicle mount control system 106 includes the imaging unit 101, an image analysis unit 102, a headlight control unit 103, and a vehicle drive control unit 108. The imaging unit 101 is provided as a capture device to capture the area ahead of the vehicle 100 in the direction of the travel. For example, the imaging unit 101 is provided near a rearview mirror near a windscreen 105 of the vehicle 100. Various data, such as captured data acquired by the imaging unit 101, is input to the image analysis unit 102 functioning as an image processor. The image analysis unit 102 analyzes the data transmitted from the imaging unit 101, calculates the position, the direction, and the distance of another vehicle in front or ahead of the vehicle 100, or detects a road surface (travelable surface) on which the vehicle is driving. When another vehicle (leading vehicle, oncoming vehicle) is detected, the leading vehicle that moves in the same direction to a direction in which the vehicle 100 is traveling is detected by recognizing a tail light of the leading vehicle, and an oncoming vehicle is detected by recognizing the headlamp of the oncoming vehicle.

The calculation result of the image analysis unit 102 is transmitted to the headlamp control unit 103. The headlamp control unit 103 generates a control signal that controls the headlamp, which is an example of the installed members in the vehicle 100, based on the distance data of another vehicle that is calculated by the image analysis unit 102. More specifically, switching between the high beam and the low beam of a head lamp 104 is controlled or partial shading of the headlamp 104 is controlled, so that the driver in the leading vehicle or the oncoming vehicle would not receive a intense light from the vehicle 100, which may otherwise cause dazzling, and at the same time, the field of view in the driver in the vehicle 100 is ensured.

Moreover, the calculation result of the image analysis unit 102 is transmitted to the vehicle drive control unit 108. The vehicle drive control unit 108 performs driving assist control to report the alert or control the steering or brakes of the vehicle 100, in case the vehicle 100 strays away the road surface, based on the detection of the road area (travelable surface area) detected by the image analysis unit 102.

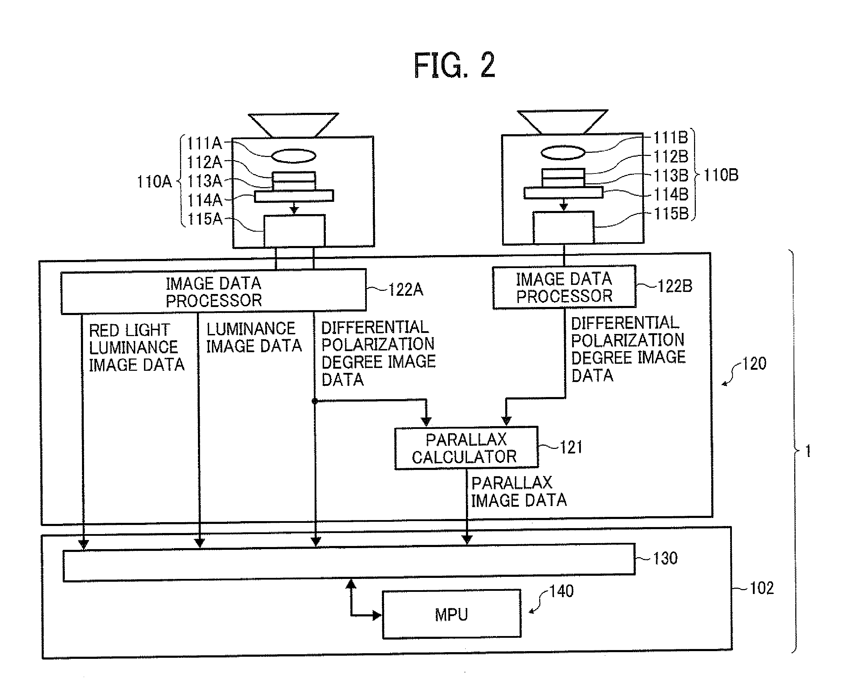

FIG. 2 is a diagram illustrating a configuration of the imaging unit 101 and the image analysis unit 102. The imaging unit 101 is a stereo camera system that includes two cameras 110A and 110B, and the two cameras (imaging devices) 110A and 110B have similar configuration.

The cameras 110A and 110B respectively include capturing lenses 111A and 111B, optical filters 112A and 112B, image sensors 113A and 113B on which image pickup elements are two-dimensionally arranged, sensor substrates 114A and 114B on which the optical filters 112A and 112B and the image sensors 113A and 113B are formed, and signal processors 115A and 115B. The signal processors 115A and 115B respectively convert analog electrical signals output from the sensor substrates 114A and 114B (the level of light received by respective receiving elements on the image sensors 113A and 113B) into digital electrical signals to generate captured image data.

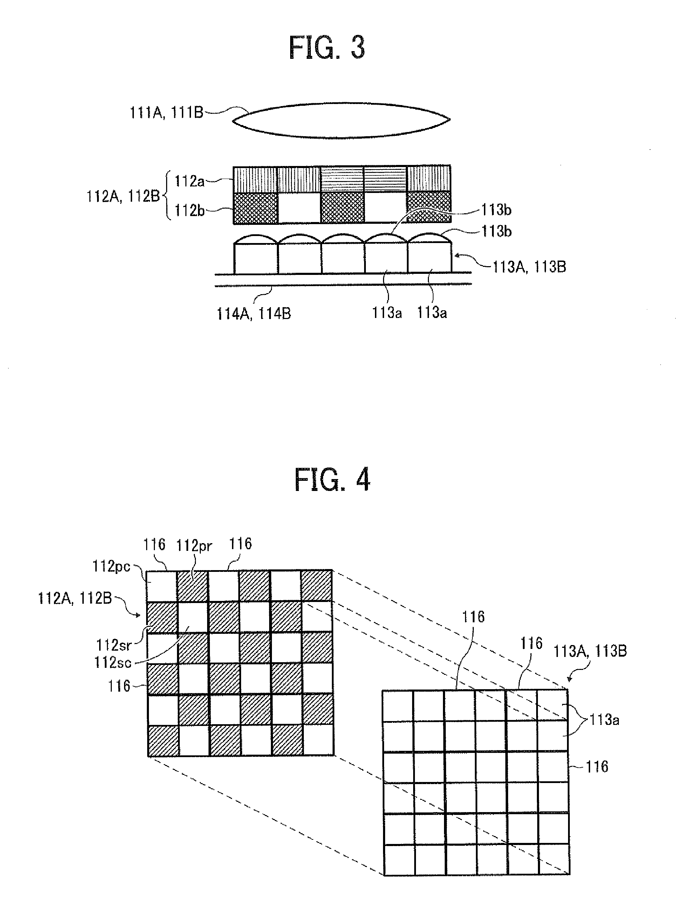

FIG. 3 is a schematic expanded view illustrating the optical filters 112A and 112B and the image sensors 113A and 113B viewed from a direction orthogonal to a direction through which light passes. Each of the image sensors 113A and 113B is constituted by an image sensor, such as, a charge coupled device (CCD) or a Complementary Metal Oxide Semiconductor (CMOS), and the imaging element (light-receiving element) is implemented by photodiodes 113a. The photodiodes 113a are arranged in an array in two-dimensional direction by imaging pixel. In order to improve the focus efficiency, for each photodiode 113a, a micro lens 113b is provided on the light incoming side of the photodiode 113a. The image sensors 113A and 113B are attached to a printed wiring board (PWB) by, for example, wire bonding, to form the sensor substrates 114A and 113B.

The optical filters 112A and 112B are provided near, such as adjacent to, the sides of the image sensors 113A and 113B facing the micro lens 113b. In the optical filters 112A and 112B illustrated in FIG. 3, a polarization filter layer 112a and a spectral filter layer 112b are formed on transmissive filter substrates (not shown). The polarization filter layer 112a and the spectral filter layer 112b are respectively divided into multiple areas so that the divided areas correlate to respective one of photodiodes 113a positioned on the image sensors 113A and 113B.

Although a clearance may be provided between the optical filters 112A and 112B and the image sensors 113A and 113B, the configuration in which the optical filters 112A and 112B are adhered to the image sensor 113A and 113B is preferable so that the border in each of the optical filters 112A and 112B is brought in line with the border between the image sensors 113A and 113B. The optical filters 112A and 112B are attached to the image sensors 113A and 113B using, for example, a UV adhesive. Alternatively, four sides other than the effective pixels of the filters and the image sensors may be connected using UV adhesive or by heat, while the effective pixel range used for capturing image is supported by a spacer.

FIG. 4 is an illustration of dividing pattern of the optical filters 112A and 112B. The polarization filter layers 112a of the optical filter 112A and 112B are divided into a vertical polarizing area and a horizontal polarizing area. The vertical polarizing area selects only a vertical polarization component (P-polarization component) that vibrates in parallel to column (vertical) lines of the photodiode 113a on the image sensors 113A and 113B for transmission. The horizontal polarizing area selects only a horizontal polarizing component (S- polarization component) that vibrates in parallel to row (horizontal) lines of the photodiode 113a on the image sensors 113A and 113B for transmission. The spectral filter layer 112b of the optical filters 112A and 112B are divided into a red-color spectral area through which only a red-color wavelength light can be selectively transmitted, and a non-spectral area through which all wavelength ranges of light is transmitted without being selected.

In each the optical filters 112A and 112B, as illustrated in FIG. 4, four types of filter areas including a first area 112pc, a second area 112pr, a third area 112sr, and a fourth area 112sc are arranged so that the respective areas correlate to "2 x 2" captured pixels. The first area 112pc is the area that receives the light transmitted through the vertical polarizing area of the polarizing filter layer 112a and the non-spectral area of the spectral filter layer 112b. The second area 112pr is the area that receives the light transmitted through the vertical polarizing area of the polarizing filter layer 112a and the red-color spectral area of the spectral filter layer 112b. The third area 112sr is the area that receives the light transmitted through the horizontal polarizing area of the polarizing filter layer 112a and the red-color spectral area of the spectral filter layer 112b. The fourth area 112sc is the area that receives the light transmitted through the horizontal polarizing area of the polarizing filter layer 112a and the non-spectral area of the spectral filter layer 112b. In the present embodiment, 2 x 2 captured pixels on the image sensors 113A and 113B correspond to 1 pixel, that is, one image pixel, on the captured image (processed image).

As a result, in the present embodiment, a P-polarized non-spectral image is acquired from an output signal of the captured image pixel corresponding to the first area 112pc, a P-polarized red-color image is acquired from an output signal of the captured image pixel corresponding to the second area 112pr, a S-polarized red-color image is acquired from an output signal of the captured image pixel corresponding to the third area 112pr, and a S-polarized non-spectral image is acquired from an output signal of the captured image pixel corresponding to the fourth area 112sc.

With these configurations, the four types of captured images can be acquired through performing capturing operation once. In the captured image data, the number of image pixels correlates to one fourth of the total number of captured image pixels. Alternatively, when the high resolution image is preferred any desired image interpolation processing can be used.

In addition, the imaging unit 101 includes a process hardware unit 120 constituted by a field programmable-gate array (FPGA). The process hardware unit 120 includes two image data processors 122A and 122B, which respectively apply image processing to four types of captured image data output from the two imaging devices 110A and 110B.

The image data processor 122A, corresponding to the imaging device 110A that captures the reference image, generates red-color luminance image data from the P-polarized red-color image data and the S-polarized red-color image data that are respectively output from the imaging device 110A. More specifically, the image data processor 122A calculates the sum of the output values of the P-polarized red-color image and the S-polarized red-color image, corresponding to the same image pixels (2 x 2 captured pixels), and then correlates the sum to the pixel values of the image pixels to generate the red luminance image data. The red-color luminance image data can be used for detecting light from tail lamps that emits red light.

The image data processor 122A generates non-spectral luminance image data from the P-polarized non-spectral image data and the S-polarized non-spectral image data that are respectively output from the imaging device 110A. More specifically, the image data processor 122A calculates the sum of the output values of the P-polarized non-spectral image and the S-polarized non-spectral image, corresponding to the same image pixels (2 x 2 captured pixels), and then correlates the sum to the pixel values of the imaged pixels (2 x 2 captured image) to generate the non-spectral luminance image data. The above-acquired non-spectral luminance image data can be used for detecting, for example, the white line as a lane marker, and a headlight of oncoming vehicles.

In the present embodiment, the two image data processors 122A and 122B function as indexed image generators to generate a differential polarized image (indexed image) having pixel values determined based on the difference polarization degree, that is, the indexed value calculated based on the P-polarization component and the S- polarization component, extracted from the P-polarized non-spectral image data and the S-polarized non-spectral image data output from the imaging device 110A. More specifically, the image data processors 122A and 122B calculate the differential polarization degree based on the output values of the P-polarized non-spectral image and the S-polarized non-spectral image corresponding to the same image pixels (2 x 2 captured image), and correlates the differential polarization degree to the pixel values of the image pixels to generate the differential polarization image data.

The differential polarization degree is acquired based on the following formula 1. More specifically, the differential polarization degree is the ratio of a difference between the P-polarization component and the S- polarization component, to the sum of the P- polarization component and the S-polarization component. In other words, the differential polarization degree is the difference between the ratio of the P-polarization component to the sum of the P-polarization component and the S-polarization component, and the ratio of the S-polarization component to the sum of the P- polarization component and the S- polarization component.

In the present embodiment, it is assumed that the difference is acquired by subtracting the S-polarization component from the P-polarization component; alternatively, the difference may be acquired by subtracting the P-polarization component from the S-polarization component.

$$DifferentialPolarization = \frac{(PPolarizationComponent - SPolarizationComponent)}{(PPolarizationComponent + SPolarizationComponent)} ...(1)$$

As for the index, it is preferable that the index is acquired by comparing the P-polarization component with the S-polarization component. In the present embodiment, the case in which the differential polarization is used as the index is described below; alternatively, the ratio (polarized ratio) of the output value of the P-polarized non-spectral image to the output value of the S-polarized non-spectral image, corresponding to the same image pixels (2 x 2 captured image pixel) may be used as the index.

However, comparing the polarization ratio with the differential polarization degree, in the process of calculating the polarized ratio, when the polarization component (e,g, P-polarization component) constituting a denominator represents a value close to 0, the polarization ratio is increased to a value close to infinity, and the correct value cannot be acquired. By contrast, in the process of calculating the differential polarization degree, when the sum of the P-polarization component and the S-polarization component constituting a denominator represents a value close to 0, the differential polarization is increased to a value close to infinity, and the correct value cannot be acquired. Comparing the polarization ratio with the differential polarization degree, it is less likely for the differential polarization degree to have the denominator having a value close to 0, thus resulting in higher possibilities to obtain the correct value.

Herein, as for the polarization ratio, although the corrected value cannot be obtained when the polarization component (e.g., P-polarization component) constituting the denominator represents a value close to zero, the corrected value can be obtained when the polarization component (e.g., S-polarization component) constituting a numerator represents a value close to zero. Accordingly, the polarization ratio is suitable index for detecting the polarization component constituting the numerator (e.g., S-polarization component).

By contrast, as for the differential polarization degree, the difference between the P-polarization component and the S-polarization component constituting the numerator represents a value close to 0 in the case in which the P-polarization component and the S-polarization component are the almost same values. Since probability that the P-polarization component represents a certain value and the probability that the S-polarization component represents that certain value are equal, the differential polarization degree is the value that can equally detect the P-polarization component and the S-polarization component. In the present embodiment, based on the above-described comparison between the polarization ratio and the differential polarization degree, the differential polarization degree is used as the index in alternative to the polarization ratio.

The process hardware unit 120 includes a parallax calculator 121, which calculates parallax in the corresponding portions between the two differential polarized images, to acquire the parallax image based on the differential polarized image data obtained by the image data processors 122A and 122B by applying processing to the captured images output from the respective imaging devices 110A and 110B. Assuming one captured image acquired by one of the imaging devices 110A and 110B is a reference image and the other captured image acquired by the other of the imaging devices 110A and 110B is a comparison image, the parallax for a certain area in the captured image area is calculated as position deviation in the certain image area (the corresponding portion) in the comparison image, which is correlated to the certain image area in the reference image. Using Principle of triangulation, the distance from the camera system to the object provided at the position corresponding to the certain image area in the captured image can be calculated based on the calculated parallax value.

In the present embodiment, the reference image and the comparison image used for calculating the parallax in the parallax calculator 121 are the differential polarized images. As described above, when the parallax is calculated from the luminance image, for example, in a situation in which the image area is dark and the sufficient luminance difference cannot be observed in the luminance image, it is less likely to have the pixel values (luminance) with characteristics in the reference image and the comparison image, and the accuracy in identifying the corresponding area is low, such that parallax cannot be accurately calculated. By contrast, in the present embodiment, the parallax is calculated from the differential polarized images as the reference image and the comparison image. In such case even through sufficient luminance difference cannot be acquired, it is likely to have the image pixel values (luminance) with characteristics, in the reference image and the comparison image. Accordingly, in the present embodiment, even in the capture situation in which the sufficient (luminance difference cannot be acquired, the parallax can be calculated accurately, thereby performing recognition process to recognize the travelable surface image area using parallax with high degree of accuracy.

In particular, comparing the polarization component contained in a reflection light from the road with the polarization component contained in a reflection light from level differences of curbs positioned road end of the road area, or road-end members such as guard rail or walls, directions of reflection surfaces thereof are 90 degree different from each other, and therefore, the polarization components therebetween have large difference. Accordingly, when the differential polarized image is used, great difference in the differential polarization is generated between the road image area showing the road and the roadside image area showing the roadside. As a result, matching process for detecting the road area can be performed appropriately, and the parallax in the road end position can be calculated.

The image analysis unit 102 includes a memory 130 and a micro processing unit (MPU) 140. The memory 130 stores the red-color luminance data, luminance image data, and red luminance image data, the parallax image data, which are output from the imaging unit 101. The MPU 140 operates according to software that causes execution of operation of recognizing the target object, or calculating parallax. The MPU 140 provides various types of recognition processes to recognize a certain recognition target and the road, using the red-color luminance image data, luminance image data, differential polarized image, and parallax image data stored in the memory 130.

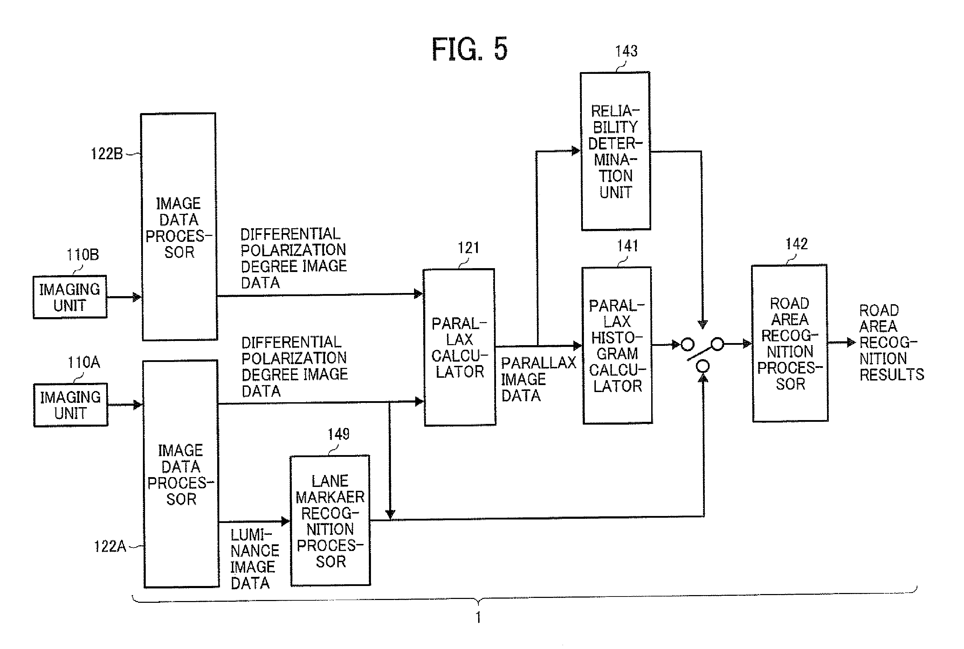

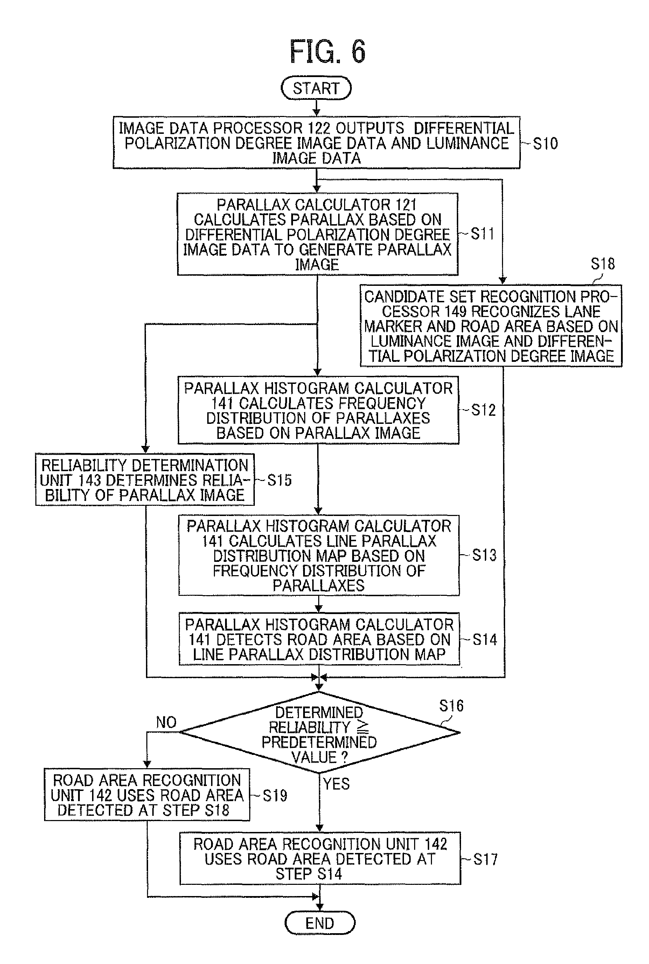

Next, operation flow of the road area recognition system 1 is described below with reference to FIGS. 5 and 6. FIG. 5 is a block diagram illustrating a configuration of the road area recognition process executed by the road area recognition system 1. FIG. 5 is a flow chart illustrating travelable area recognition process executed by the road area recognition system 1. FIG. 6 is a flowchart illustrating operation of recognizing a road area. The process executed at the respective blocks of the functional blocks in the road area recognition system can be performed by dedicated hardware configuration, or be performed by a software configuration using a general-purpose processor. The road area recognition system 1 includes image data processors 122A and 122B, a lane marker recognition processor 149, the parallax calculator 121, a reliability determination unit 143, a parallax histogram calculator 141, and a road area recognition processor 142. In the present embodiment, after the parallax image data is output from the parallax calculator 121, the respective blocks 141, 142, and 143 and the lane marker recognition processor 149 are implemented by a software processor executed by the MPU 140 in the image analysis unit 102.

At step S10 shown in FIG. 6, the differential polarized images from the two image data processors 122A and 122B are input to the parallax calculator 121. In this example, the parallax 121 treats one of the differential polarized images output from one of the two image data processors 122A and 122B as reference image data and treats the other of the differential polarized images output from the other of the two image data processors 122A and 122B as comparison image data. The parallax calculator 121 calculates the parallax that is a difference between the image forming positions of the reference image and the comparison image in the object of the stereo image, to generate parallax image data, using the differential polarized images of the reference image and the comparison image at step S11. The parallax image data represents the pixel values, in accordance with the parallaxes calculated for the image data on the reference image data, as the pixel values in the respective values in the image.

More specifically, the parallax calculator 121 defines the blocks constituted by multiple pixels (for example, 16 x 1 pixels) having a single target pixel at it center for the line on which the reference image is present, based on the same areas between the differential polarized images input by the image data processors 122A and 122B, using block matching method.

In the line corresponding to the line, in which the comparison image is present, the block having the same size to the defined block of the reference image data is shifted in a lateral direction (X-direction) by one pixel at a time, and the correlation value is calculated, which represents the relation in the image pixel characteristics value representing the characteristics of the pixel values of the defined block between the reference image data and the comparison image data.

Then, based on the calculated correlation value, the parallax calculator 121 performs block matching to select the block having the highest correlation to the block in the reference image from the blocks in the comparison images. Subsequently, the position deviation amount between the target pixel of the block in the reference image data and the corresponding pixel of the block of the comparison image selected in the matching processing is calculated as the parallax at step S11. This calculating parallax value processing is performed for the entire area or a specific area of the reference image, to obtain the parallax image data. The above-acquired parallax data is transmitted to the parallax histogram calculator (parallax histogram information generator) 141 and the reliable determination unit 143.

As for the characteristic values of the block used for the matching processing, for example, the value of the respective pixels (differential polarization degree) in the block can be used. As for the correlated value, for example, the sum of absolute differences between the respective pixel values (differential polarization degrees) of the block in the reference image and the respective pixel values (differential polarization degree), correlated to the respective pixel values of the block in the reference image, of the block in the comparison image, can be used. In this case, the block whose sum is the smallest means the most correlated block in the parallax image.

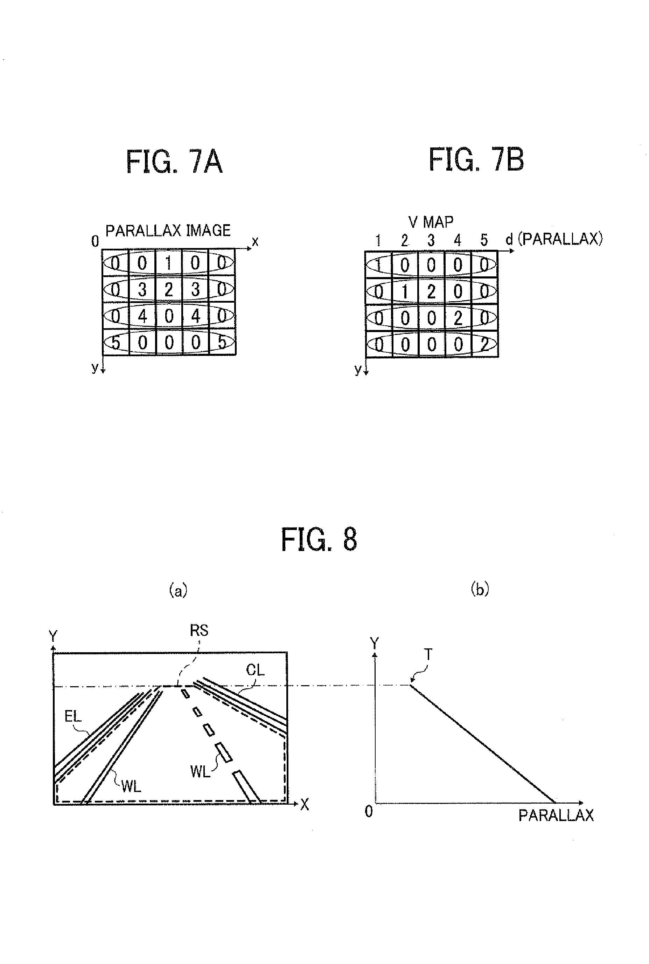

The parallax histogram calculator 141 acquires the parallax image data and then calculates frequency distribution of the parallaxes for the respective lines of the parallax data at step S12. The respective lines are obtained by dividing the parallax image in vertical and horizontal directions. The information indicating the parallax frequency distribution represents parallax histogram information. More specifically, when the parallax image data having the distribution of the parallax like that shown in FIG. 7A is input, the parallax histogram calculator 141 calculates the frequency distribution of the parallaxes, which is distribution of a number of parallax data items, for each line to output as the parallax histogram information. FIG. 7A is one example of parallax value distribution in the parallax image. FIG. 7B is a linear parallax distribution map (V map) representing line-by-line frequency distribution of the parallaxes in the parallax image.

At S13, the above-acquired information of the frequency distribution of the parallax value for each line can be expressed on the two-dimensional plane to obtain the line parallax distribution map (V map shown in FIG. 7B). For example, referring to FIG. 7B, the vertical axis of V map corresponding to the longitudinal direction position on the parallax image, and the horizontal axis of the V map corresponds to the parallax.

Herein, the pixels representing the road area RS are present at almost the same positions in the respective lines in the parallax image so as to have almost the same distance and highly dominate the image. These pixels show that the position of captured targets becomes continuously far from the vehicle 100 as the position of the pixels on the graph moves up.

Accordingly, a straight line having a gradient whose parallax becomes smaller as the position of the pixel moves from a lower portion to an upper portion in the image, in the line parallax distribution map, represents the road area. Using these characteristics, the parallax histogram calculator 141 detects the road area on which the vehicle 100 can drive at step S14. With these processes, the travelable area recognition system 1 of the present disclosure can simply and accurately perform recognition process to recognize the road area (travelable area).

FIG. 8(a) is a schematic illustration of an example of an example image captured image (luminance image) acquired by the imaging device 110A. FIG. 8(b) is a graph illustrating the straight line approximation of the pixel distribution on the line parallax distribution map (V map) based on the frequency distribution of the parallax values for each line calculated by the parallax histogram calculator 141. The image example shown in FIG. 8(a) is captured under the situation in which the vehicle drives in the left lane in the two straight lanes divided by the center median. The mark CL represents the center median image showing the center median, mark WL represents the white line image area (lane marker image area) representing the lane marker line, and mark EL represents a roadside level difference image area representing a level difference that may be present on the road end such as curbstone.

Herein, the roadside level difference image area EL and the center median image area CL are together called as the level difference image. An area RS surrounded by a broken line represents the road area (travelable surface image area) on which the vehicle 100 is traveling, which is marked off by the center median and the roadside level difference along the sides of the vehicle lane.

Along with these processes, the reliability determination unit (parallax reliability determination unit) 143 determines the reliability of the parallax image data at step S15. When the reliability of the parallax image data is equal to or greater than a defined value (Yes at step S16), the road area recognition processor (travelable area recognition processor) 142 recognizes the road area RS based on the information of the parallax frequency distribution  (parallax histogram information) of the respective lines output from the parallax histogram calculator 141.

Conversely, when the reliability of the parallax image data is smaller than the defined value (No at step S16), the road area recognition processor 142 recognizes the road area RS at step S19, using white line recognition result recognized from the luminance image data and the differential polarization image data output from the lane marker recognition processor 149 at step S18, to be described in detail below.

The reliability determination unit 143 determines the reliability of the parallax image data using the following method. Initially, a block of 3 x 3 pixels is identified in the input parallax image. The block is shifted from a left end to a right end in a center potion in a vertical direction, and the dispersion of the pixel values (parallaxes) in each one of the respective shifted blocks is calculated. Then, using the sum of the dispersion of the respective blocks as the reliability, when the sum is smaller than a defined value, the reliability determination unit 143 determines that the reliability of the parallax image data is high (higher than the defined value). When the sum is equal to or greater than the defined value, the reliability determination unit 143 determines that the reliability of the parallax image data is low (lower than the defined value).

Herein, objects shown in the respective blocks are often the objects positioned at the same distance from the vehicle.

Therefore, if the suitable parallax is calculated, the dispersion in the respective blocks has a small value. If the suitable parallax is not calculated, the dispersion has a great value. The reliability determination unit 143 detects the difference of the dispersion in the blocks to determine the reliability of the parallax image data. In alternative to the above-described reliability determination method, the reliability can be determined, using the level of illumination or the magnitude of contrast in luminance.

When the reliability determination unit 143 determines that the reliability of the parallax image data is high (equal to or higher than the defined value), the road area recognition processor 142 receives the respective line parallax frequency distribution information of the respective lines output from the parallax histogram calculator 141. Then, the road area recognition processor 142 converts the pixel distribution on the line parallax frequency information, specified using the input information, into approximate straight line data by approximating process using least-square method or the Hough transform method. At this time, it is preferable to divide a parallax range subjected to approximation into the multiple parallax range corresponding to the actual distance of 20 m, and perform approximation processing within each one of the divided parallax ranges.

When a gradient condition of the road that is expressed shown in the captured image varies on the way (e.g., the gradient is changed from the flat plane to steep upslope), in the distribution of the pixels corresponding to the road area on the line parallax distribution map, the value of parallax change (gradient) in road area relative to a position change in the image in the vertical direction varies at a position corresponding to the position at which the gradient condition changes. Accordingly, in this case, when the pixel distribution is approximated to the straight line throughout the entire line parallax distribution map, the road area recognition processor 142 may fail to detect the road area appropriately.

By contrast, by dividing the parallax ranges subjected to straight-line approximation into the multiple parallax regions and approximating the dispersion within each one of the divided parallax regions to the straight line, even when the gradient condition of the road area varies on the way, the approximation of the dispersion to the straight line can be performed in accordance with the gradient change, and the road area can be recognized appropriately.

The acquired approximate straight line of FIG. 8(b) has a gradient whose parallax is smaller as the position moves up in the image, in the lower portion of the horizontal line parallax histogram corresponding to the lower portion of the parallax image shown in FIG. 8(a). That is, this graph of FIG. 8(b) indicates that the pixels (pixels in the parallax image) positioned on the approximate straight line or near the approximate straight line are positioned in the respective lines in the parallax image so as to have almost same distance and highly dominate the image, and these pixels shows that the position of captured targets becomes gradually far from the vehicle 100 as the position of the pixel on the graph moves up.

Herein, since the imaging device 110A captures the area ahead of the vehicle 100, in case of the parallax image of FIG. 8(a), the occupancy of the road area RS is the largest on the lower portion of the image, and the parallax value of the road area RS becomes smaller as the position of the pixel moves up toward an upper portion. In addition, in the same line (lateral line), the pixels constituting the road area RS has almost same parallax value.

The pixels positioned on the approximate straight line or near the approximate straight line on the line parallax distribution map (V map), specified by the information of the parallax value frequency distribution for each line output from the parallax histogram calculator 141 correspond to the characteristics of the pixels constituting the road area RS. Accordingly, it can be assumed that the pixels positioned on the approximate straight line or near the approximate straight line like that shown in FIG. 8(b) are the pixels constituting the road area RS with a high degree of accuracy.

As described above, the road area recognition processor 142 performs straight-line approximation processing on the line parallax distribution map (V map), specified by the information of the parallax value frequency distribution for each line output from the parallax histogram calculator 141, specifies the pixels positioned on the approximate straight line or near the approximate straight line as the pixels showing the road area, and recognizes the image area occupied by the specified pixel as the road area RS.

It is to be noted that, the white line WL is present on the load like that shown in FIG. 8(a), the road area recognition processor 142 recognizes the road area RS containing the lane marker image area WL.

Conversely, when the reliability determination unit 143 determines that the reliability of the parallax data is low (lower than the defined value), the road area recognition processor 142 receives the lane marker recognition result output from the lane marker recognition processor 149 and the differential polarized image data output from the image data processor 122A.

In the lane marker recognition process, after receiving the luminance image data from the image data processor 122A, the lane marker recognition processor (white line recognition processor) 149 extracts the portion where the pixel value (luminance) of the luminance image is changed over a specified value as an edge area. The lane marker recognition processor (travelable area candidate detector) 149 recognizes the lane marker image (white line image area) WL showing the white line on the road based on the luminance image data, using the following process. Any known method is used for the method of edge extracting. In many roads, the white line is formed on the road whose color is near black, and the luminance of the white line image area WL in the luminance image is sufficiently higher than that of the road area.

Accordingly, the edge area in the luminance image, having a difference in pixel value that is equal to or greater than the defined value is likely to be the edge area of the white line. Since the white line image area WL showing the white line on the road is projected onto the captured image with a line shape, by identifying the linear edge area, the edge area of the white line can be recognized with a high degree of accuracy. Therefore, in the present embodiment, the lane marker recognition processor 149 performs straight-line approximation processing on the edge area using least-squares method or Hough transform, and then recognizes the acquired approximated straight line as the edge area of the white line (white line image area WL showing the white line on the road).

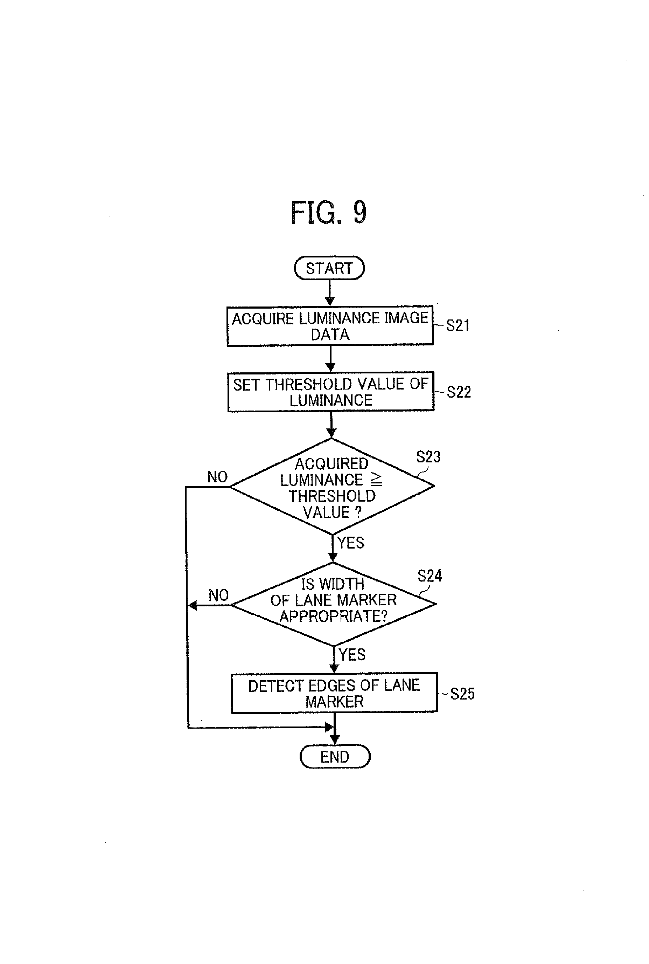

FIG. 9 is a flow chart illustrating white recognition process executed by the lane marker recognition processor 149. In FIG. 9, after acquiring the luminance image data from the image data processor 122A at step S21, the lane marker recognition processor 149 sets a threshold value of the luminance at step S22. At this time, since the contrast of the lane marker is different between an upper portion and a lower portion of the luminance image, when the lane marker recognition process is performed using the same threshold value, preferable result cannot be acquired.

In this case, one luminance image is divided into two portions of the upper area and the lower area and the luminance threshold values are set respectively. Using the threshold values for the luminance image, the lane marker recognition processor 149 compares the respective pixel values (luminance) of the luminance image data with the set threshold values at step S23. By comparing the pixel values with the threshold values, the lane marker recognition processor 149 detects the pixels having the luminance equal to or higher than the threshold value as a candidate set of white line edge areas (lane marker edges).

Subsequently, the lane marker recognition processor 149 compares the magnitude of the detected candidate set of the white line edge areas with a predetermined threshold value of the white line width, to determine whether the lane marker width of the candidate set of the white lane edge has a value appropriate or not, at step S24. When the white line width is determined as appropriate (Yes at step S24), the lane marker recognition processor 149 extracts the detected candidate set of the white edge areas as white line edges representing both side edges of the single white line.

After receiving the white line recognition result output from the lane marker recognition processor 149 and the differential polarized image data output from the image data processor 122A, the road area recognition processor 142 performs following processing. Initially, based on the white line recognition result, the road area recognition processor 142 identifies a certain area(white line area) corresponding to the white line image on the differential polarized image and acquires the pixel values (differential polarized degree) of a center pixel (road reference pixel) positioned close a center portion of the white line image. In general, since the road reference pixels are likely to show the road area, it can be assumed that the differential polarization degree of the road referential pixels corresponds to the differential polarization degree of the road area at this point.

Then, while the road area recognition processor 142 shifts the target pixel, one by one, from the white line image area toward the outside of the image in the right and left directions for each one of the respective lines of the differential polarized image, the road area recognition processor 142 calculates difference between the differential polarization degree of the respective target pixels and the differential planarization degree of the road reference pixels. When the target pixels show the road area, the differential polarization degree of the target pixels and the differential polarization degree of the road reference pixels have almost the same value.

Conversely, when the target pixels show the level difference such as curbs on the side, or the road end member such as a wall, the differential polarization degree of the target pixels greatly differs from the differential polarization degree of the road reference pixel. Accordingly, while calculating the difference between the differential polarization of the respective target pixels and the differential polarization of the road reference pixels, when an area at which the difference therebetween exceeds a certain threshold value is detected, the road area recognition processor 142 determines that the detected area correlate to a border area between the road area and the road end member, which recognizes the road area based on the determination result.

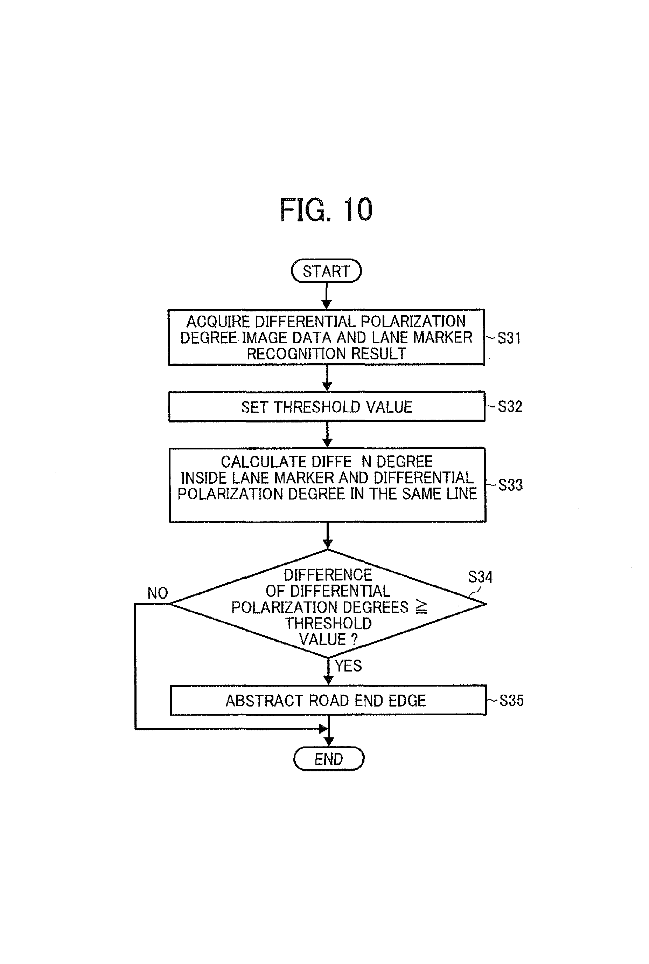

FIG. 10 is a flow chart illustrating a road area recognition process executed by the road area recognition processor 142. In FIG. 10, after receiving the white line recognition result from the lane marker recognition processor 149 and the differential polarized image data from the image data processor 122A at step S31, the road area recognition processor 142 sets the threshold value at step S32, and performs the above-described processes. More specifically, based on the white line recognition result, the road area recognition processor 142 identifies the white line area corresponding to the white line area on the differential polarized image and acquires the pixel value (differential polarization degree) of the pixels (road reference image pixel) close to the inner side of the white line image area for each one of the respective lines in the differential polarized image data.

Then, for each one of the respective lines in the differential polarized image data, the road area recognition processor 142 shifts the target pixel, for example, by one pixel by one pixel, from the white line image area toward the outside of the image in the right and left directions. The road area recognition processor 142 calculates difference between the differential polarization degree of the respective target pixels and the differential planarization degree of the road reference pixels, at step S33. When the target pixel shows the road surface, the differential polarization degree of the target pixel has almost the same value to the differential polarization degree of the road reference pixel.

On the contrary, when the target pixels show the level difference such as curb on the road edge or the road end member such as a wall, the differential polarization degree of the target pixels greatly differs from the differential polarization degree of the road reference pixel. Accordingly, in calculating the difference between the differential polarization degree of the respective target pixel and the differential polarization degree of the road reference pixel, when an area at which the difference therebetween exceeds a certain threshold value, the road area recognition processor 142 determines that the detected area correlates to the border area between the road area and the road end member, and extracts the detected target pixel as a road end edge at step S35.

With these processes, the travelable area recognition system 1 of the present disclosure can stably recognize the road area (travelable area), using not only the calculation result of the parallax calculator 121 but also extraction result of the edge areas on the indexed image.

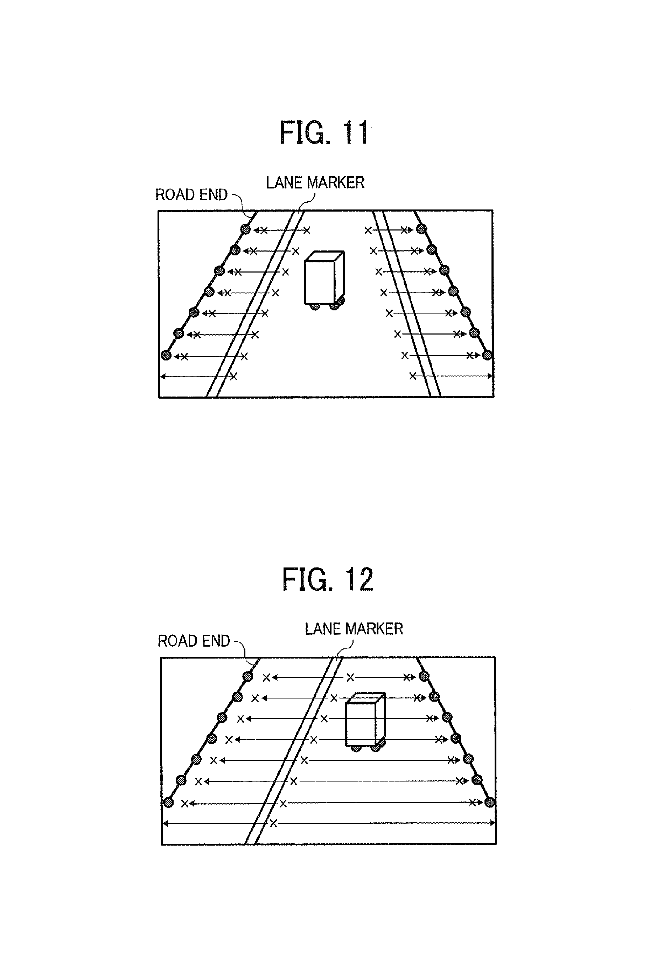

FIG. 11 is an illustration for explaining process of the road area recognition corresponding to a first example of a white line recognition result. In this example of FIG. 11, the white line edge areas corresponding to the two white lines in the captured image are accurately extracted. In this process, as described above, for each one of the respective horizontal lines of the differential polarized image data, the road area recognition processor 142 calculates the difference between the differential polarization degrees of the road reference pixels "X" positioned on the inside of the white lines and the differential polarization degrees of the target pixels, from the white line image area toward the outside of the image "← →"in the right and left directions. Then, the road area recognition processor 142 compares the calculated difference with the threshold value to extract the road end edge. In FIG. 11, marks "X" represent the target pixels each having the difference in differential polarization degrees with respect to the road reference pixel is lower than the threshold value, and marks "●" represent the target pixels each having the difference in differential polarization degrees with respect to the road reference pixel a is equal to or greater than the threshold value. The road area recognition processor 142 recognizes two lines, each is formed by connecting the pixels indicated by the marks "●", as the road end edges.

FIG. 12 is an illustration for explaining process of the road area recognition corresponding to a second example of the white line recognition result. In this example of FIG. 12, the white line edge area corresponding to the single white line at the left on the captured image is accurately extracted. In this process, the road area recognition processor 142 calculates, for the road end edge at the left side, the difference between the differential polarization degrees of the road reference pixels "X" positioned on the right (inner) side the white lines and the differential polarization degrees of the target pixels, from the recognized white line image are toward the left side of the image "←" in the horizontal direction. Then, the road area recognition processor 142 compares the calculated difference with the threshold value to extract the left side road end edge.

In addition, for the road end edge at the right side, the road area recognition processor 142 calculates the difference between the differential polarization degrees of the road reference pixels "X" positioned on the right side (outside) of the white lines and the differential polarization degrees of the target pixels, from the recognized white line image area toward the right side of the image "→" in the right direction. Then, the road area recognition processor 142 compares the calculated difference with the threshold value to extract the right side road end edge. In this process, the road reference pixels for extracting the left side road end edge are used as the road reference pixels for extracting the right side road end edge.

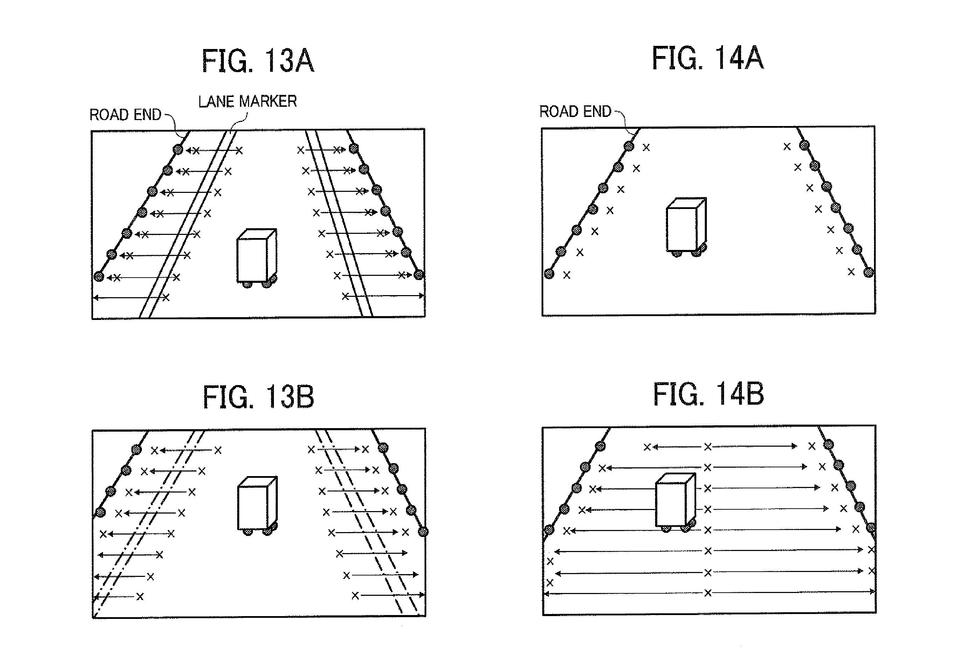

FIGS. 13A and 13B are illustrations for explaining process of the road area recognition corresponding to a third example of a white line recognition result. In this example, it is assumed that the white line edge areas corresponding to the two white lines are accurately extracted in a previously captured image (frame) as illustrated in FIG. 13A, but the white line edge areas corresponding to the two white lines are not accurately extracted in a presently captured image (frame) as illustrated in FIG. 13B

In this case, the white line recognition results of in the previously captured image is used for the current extracting process to extract the road end edge in the captured image (broken line shown in FIG. 13B). More specifically, for each one of the respective horizontal lines of the differential polarized image data, the road area recognition processor 142 calculates the difference between the differential polarization degrees of the road reference pixels "X" positioned the inside of the previously recognized white lines and the differential polarization degrees of the target pixels outside the white lines, from the previously recognized white image area toward the outside of the image "← →" in the right and left directions. Then, the road area recognition processor 142 compares the calculated difference with the threshold value to extract the road end edge

FIGS. 14A and 14B are illustrations for explaining process of the road area recognition corresponding to a fourth example of a white line recognition result. In this example, it is assumed that the white line edge areas corresponding to the two white lines are not extracted in a previously captured image (frame) as illustrated in FIG.14A, and the white line edge areas corresponding to the two white lines are not extracted in a presently captured image (frame) as illustrated in FIG. 14B.

In this case, for each one of the respective horizontal lines of the differential polarized image data, the road area recognition processor 142 sets the pixels at the center position in the horizontal direction as the road reference pixel, calculates the difference between the differential polarization degrees of the road reference pixel and the differential polarization degree of the target pixels from the center position in the horizontal direction of the image toward the outside of the image in the right and left directions "← →". Then, the road area recognition processor 142 compares the calculated difference with the threshold value to extract both sides of the road end edges.

FIGS. 15A and 15B are illustrations for explaining process of the road area recognition corresponding to a fifth example of a white line recognition result. In this example, the white line edge areas corresponding to the two continuous white lines are accurately extracted in the previously captured image (frame) as illustrated in FIG. 15A, and the white line edge areas corresponding to intermittent two white lines are extracted in the presently captured image (frame) as illustrated in FIG. 15B.

In this case, for the lines where the white line edges were previously extracted, the road area recognition processor 142 calculates the difference between the differential polarization degree of the road reference pixel "X" located inside of the presently recognized white line and the differential polarization degree of the target pixel positioned outside of the white line from the recognized white line image area toward the outside of the image "← →" in the right and left directions. Then, the road area recognition processor 142 compares the calculated difference with the threshold value to extract both sides of the road end edges. For the lines where the white line edges were not extracted, the road area recognition processor142 uses the previous white line recognition result (broken line shown in FIG. 15B) and calculates the difference between the differential polarization degree of the road reference pixel located inside of the previously recognized white lines and the differential polarization degrees of the target pixel positioned outside of the previously recognized white lines, from the previously recognized white line image area toward the outside of the image "← →" in the right and left directions. Then, the road area recognition processor 142 compares the calculated difference with the threshold value to extract both sides of the road end edges.

FIGS. 16A and 16B are illustrations for explaining process of the road area recognition corresponding to a sixth example of a white line recognition result. In this example, the white line edge areas corresponding to the two white lines in a previously captured image (frame) are not accurately extracted as illustrated in FIG.16A, and the white line edge areas corresponding to a part of the two continuous white lines are extracted in a presently captured image (frame) as illustrated in FIG. 16B.

In this case, for the lines where the white line edges are extracted, the road area recognition processor 142 calculates the difference between the differential polarization degree of the road reference pixel located inside of the currently recognized white line, from the while line image area and the differential polarization degree of the target pixel positioned outside of the white line toward the outside of the image "← →" in the right and left directions. Then, the road area recognition processor 142 compares the calculated difference with the threshold value to extract both sides of the road end edges. For the line areas where the white line edges are not extracted, the road area recognition processor 142 uses a virtual white line extended from the currently recognized white line in the current captured image, calculates the difference between the differential polarization degree of the road reference pixel located inside of the virtual white line, from the white line image area and the differential polarization degree of the target pixel positioned outside of the virtual white line toward the outside of the image "← →" in the right and left directions. Then, the road area recognition processor 142 compares the calculated difference with the threshold value to extract both sides of the road end edges.

The above-described recognition result of the road area recognition processor 142 is transmitted to the subsequent processor, which is used for various types of processing. For example, when the captured image showing in an area ahead of the vehicle acquired by the imaging unit 101, is displayed on an image display inside the vehicle, based on the recognition result of the road area recognition processor 142, the image analysis unit 102 displays the road area RS indicated by the recognition result on the display image, thus helping the driver easily recognize the road area RS.

In above-described embodiment, the travelable area recognition system (1) for traveling on a travelable area, is installed in a moving body (100) and operatively connected to multiple imaging devices (110A, 110B) that capture multiple images of the area surrounding the moving body (100), and recognizes a travelable image area in the captured image. The travelable area recognition system (1) includes multiple indexed image generators (122A, 122B), a parallax calculator (121), and a travelable area recognition processor (142). The multiple indexed image generators (122A, 122B) generates multiple indexed images from the multiple captured images acquired by the imaging devices (110A, 110B) installed in the moving body (100), and the indexed images have pixels corresponding to indexes calculated based on multiple polarization components having different polarization directions respectively. The parallax calculator (121) calculates parallaxes for each of the pixels, based on the indexed images generated by the indexed image generators (122A, 122B) from the multiple captured images. The travelable area recognition processor (142) recognizes the travelable image area based on the parallaxes calculated by the parallax calculator (121).

To recognize the travelable area with a high degree of accuracy, accuracy of the parallaxes is important. In order to improve the accuracy of the parallax, it is desired to identifying the corresponding area in the comparison image, which matches the pixel value characteristics in the image area (parallax calculation corresponding area) in the reference image, or which has the pixel value characteristics included in a predetermined vicinity area of the image area in the reference image. At this time, in a situation in which the image area is dark and the sufficient luminance difference cannot be observed in the luminance image, it is less likely to have the pixel values (luminance) with characteristics in the reference image and the comparison image, and the accuracy in identifying the corresponding area is low, such that parallax cannot be accurately calculated.

By contrast, in the present embodiment, the parallax is calculated from the differential polarized images as the reference image and the comparison image. In such case even through sufficient luminance difference cannot be acquired, it is likely to have the image pixel values (luminance) with characteristics, in the reference image and the comparison image. Accordingly, in the present embodiment, even in the capture situation in which the sufficient luminance difference cannot be acquired, the parallax can be calculated accurately, thereby performing recognition process to recognize the travelable surface image area using parallax with high degree of accuracy. It is to be noted that, in the above-described embodiment, although the imaging units (110A, 110B) capture the area ahead of the vehicle 100, alternatively, the imaging unit (110A, 110B) may capture the area surrounding the vehicle 100.

In addition, the travelable area recognition system (1) further includes a parallax histogram information generator (141) to divide each of the captured images into multiple liner regions in a vertical direction based on the parallax calculated by the parallax calculator (121), to generate parallax histogram information indicating frequency distribution of the parallaxes in the respective linear regions. The travelable area recognition processor (142) selects a parallax group having the characteristics in which the parallax decreases as the position moves upward in the captured image, from the parallaxes of the pixels, based on the parallax histogram information, and recognizes an image area whose pixels in the captured image correlates to the selected parallax group, as the travelable image area.

With these processes, the travelable area recognition system 1 of the present disclosure can simply and accurately perform recognition process to recognize the road area (travelable area).

Furthermore, the travelable area recognition processor (142) divides the parallaxes obtained for each of the pixels into multiple sections by the parallax, applies approximation processing to the parallaxes in each one of the divided multiple sections so that the parallax is decreased at a constant ratio, as the position of the pixel moves up in the captured image, and selects the parallaxes to which the approximation processing is applied, as the parallax group.

With these processes, even when the gradient condition of the road area varies on the way, the approximation of the dispersion to the straight line can be performed in accordance with the gradient change, and the road area can be recognized appropriately.

The travelable area recognition system (1) further includes a travelable area candidate detector (149) to extract the area where the pixel in the indexed image generated by the indexed image generators (122A, 122B) changes in a value equal to or greater than a defined value, from a reference image acquired by one of the imaging devices (110A), and detect a candidate set of the travelable image areas based on the extracted result. The travelable area recognition processor (142) recognizes the travelable image areas based on the detection result of the travelable area candidate detector (149) and the parallaxes calculated by the parallax calculator (121).

With these processes, the travelable area recognition system 1 of the present disclosure can stably recognize the road area (travelable area), using not only the calculation result of the parallax calculator 121 but also extraction result of the edge areas on the indexed image.

The travelable area recognition system further includes a parallax reliability determination unit (143) to determine reliability of the calculation result of the parallax calculator (121). The travelable area recognition processor (142) recognizes the travelable image area based on the parallax calculated by the parallax calculator (121) when the reliability determined by the parallax reliability determination unit (143) fulfills a defined condition. The travelable area recognition processor (142) recognizes the travelable image area based on the detection result of the travelable area candidate detector (149) when the reliability determined by the parallax reliability determination unit (143) does not fulfill a defined condition.

With this configuration, the road area can be stably recognized with a higher degree of accuracy.

In addition, the parallax reliability determination unit (143) determines the reliability of the calculation result based on a specific accuracy obtained for the corresponding area identified in a comparison image acquired by the other of the imaging devices (110B), correlating to the parallax calculated area in the reference image acquired by the one of the imaging devices (110A).

With this configuration, the road area can be recognized with a higher degree of accuracy.

The travelable area recognition system (1) may include multiple imaging devices (110A, 110B) to capture the image. With this configuration, the travelable area recognition system (1) can be installed in the vehicle (100). In the above-described embodiment, although the vehicle 100 is used as a moving body that installs the travelable area recognition system 1; alternatively, the travelable area recognition system 1 can be installed in various types of moving bodies, such as ships, airplanes, or industrial robots.

Herein, the present invention of the present disclosure can provide, in addition to the travelable area recognition system and the travelable area recognition method described above, a computer readable program for executing the method. The computer program that implements the functions of the travelable area recognition system according to the above-described embodiment and variation can be configured to be stored in a computer connected to a network, such as the Internet, and provided by being downloaded via the network. The computer program that implements the image processing according to the present embodiment can be configured to be provided or distributed via a network, such as the Internet. The computer program to be executed by the image processing apparatus according to the present embodiment can be provided by being recorded in a computer-readable recording medium such as a CD-ROM, an FD, a CD-R, and a DVD as a file in an installable format or an executable format.

Alternatively, the computer program to be executed by the travelable area recognition system according to the present embodiment can be provided by being downloaded by a predetermined transmission device over a transmission medium, such as telephone line, dedicated network, Internet, and other communication systems. Herein, while transmitting the program, at least a part of computer program should be transmitted through the transmission medium. That is, not all of data constituting the computer program should be present in the communication medium (signal) at one time. The communication medium (signal) is implemented by a carrier wave of a computer data signal containing the computer program. A communication method to transmit the computer program from the predetermined transmission device may contain a continuous transmission process to transmit the data constituting the computer program and an intermittent transmission process.

**Claims**

1. A travelable area recognition system (1) installed in a moving body (100) for traveling on a travelable area and operatively connected to multiple imaging devices (110A, 110B) that capture multiple images of the area surrounding the moving body (100), and configured to recognize a travelable image area in the captured image, the travelable area recognition system (1) comprising:

    multiple indexed image generators (122A, 122B) configured to generate multiple indexed images from the multiple captured images acquired by the imaging devices (110A, 110B) installed in the moving body (100), the indexed images having pixels corresponding to indexes calculated based on multiple polarization components having different polarization directions respectively;
    a parallax calculator (121) configured to calculate parallaxes for each of the pixels, based on the indexed images generated by the indexed image generators (122A, 122B) from the multiple captured images; and
a travelable area recognition processor (142) configured to recognize the travelable image area based on the parallaxes calculated by the parallax calculator (121).

2. The travelable area recognition system (1), according to claim 1, further comprising:

a parallax histogram information generator (141) to divide each of the captured image into multiple liner regions in a vertical direction based on the parallax calculated by the parallax calculator (121), to generate parallax histogram information indicating frequency distribution of the parallaxes in the respective linear regions, wherein the travelable area recognition processor (142) is configured to:

select a parallax group having the characteristics in which the parallax decreases as the position moves upward in the captured image, from the parallaxes of the pixels, based on the parallax histogram information, and
recognize an image area whose pixels in the captured image correlates to the selected parallax group, as the travelable image area.

3. The travelable area recognition system, according to claim 2, wherein the travelable area recognition processor (142) is configured to:

divide the parallaxes obtained for each of the pixels into multiple sections by the parallax value,
apply approximation processing to the parallaxes in each one of the divided multiple sections so that the parallax is decreased at a constant ratio, as the position of the pixel moves up in the captured image, and
select the parallaxes to which the approximation processing is applied, as the parallax group.

4. The travelable area recognition system (1) according to any one of claims 1 to 3, further comprising:

a travelable area candidate detector (149) to extract the area where the pixel in the indexed image generated by the indexed image generators (122A, 122B) changes in a value equal to or greater than a defined value, from a reference image acquired by one of the imaging devices (110A), and detect a candidate set of the travelable image areas based on the extracted result,
wherein the travelable area recognition processor (142) recognizes the travelable image areas based on the detection result of the travelable area candidate detector (149) and the parallaxes calculated by the parallax calculator (121).

5. The travelable area recognition system (1) according to claim 4, further comprising:

a parallax reliability determination unit (143) to determine reliability of the calculation result of the parallax calculator (121);
wherein the travelable area recognition processor (142) recognizes the travelable image area based on the parallax calculated by the parallax calculator (121) when the reliability determined by the parallax reliability determination unit (143) fulfills a defined condition, and
the travelable area recognition processor (142) recognizes the travelable image area based on the detection result of the travelable area candidate detector (149) when the reliability determined by the parallax reliability determination unit (143) does not fulfill a defined condition.

6. The travelable area recognition system according to claim 5, wherein the parallax reliability determination unit (143) determines the reliability of the calculation result based on a specific accuracy obtained for the corresponding area identified in a comparison image acquired by the other of the imaging devices (110B), correlating to the parallax calculated area in the reference image acquired by the one of the imaging devices (110A).

7. The travelable area recognition system (1) according to any one of claims 1 to 6, further comprising multiple imagine devices (110A, 110B) to capture the image.

8. A travelable area recognition method, executed by a travelable area recognition system (1), installed in a moving body (100), for traveling on a travelable area and operatively connected to multiple imaging devices (110A, 110B) to capture multiple images of the area surrounding the moving body (100), to recognize a travelable image area in the captured image,

the method comprising the steps of:

generating an indexed images from the multiple captured images acquired by the multiple imaging devices installed in the moving body (100), the indexed images having pixels corresponding to indexes calculated based on multiple polarization components having different polarization directions respectively;

calculating parallax for each of the pixels, based on index image from the multiple captured images; and

recognizing the travelable image area based on the calculated parallax.

9. A travelable area recognition program comprising computer program code means that, when executed on the travelable area recognition system (1), instructs the travelable area recognition system (1) to perform the travelable area recognition method of claim 8.

10. A recording medium (130) storing the computer program code means of claim 9.

# FIG. 1

# FIG. 2

EP 2 674 893 A2

# FIG. 3

111A, 111B

112A, 112B { 112a
              112b

113b

113b

113A, 113B

114A, 114B          113a  113a

# FIG. 4

116  112pr  116

112pc

112A, 112B

112sr
112sc

116

116

116  113A, 113B

116

113a

116

FIG. 5

EP 2 674 893 A2

# FIG. 6

START

IMAGE DATA PROCESSOR 122 OUTPUTS DIFFERENTIAL POLARIZATION DEGREE IMAGE DATA AND LUMINANCE IMAGE DATA — S10

PARALLAX CALCULATOR 121 CALCULATES PARALLAX BASED ON DIFFERENTIAL POLARIZATION DEGREE IMAGE DATA TO GENERATE PARALLAX IMAGE — S11

CANDIDATE SET RECOGNITION PRO-CESSOR 149 RECOGNIZES LANE MARKER AND ROAD AREA BASED ON LUMINANCE IMAGE AND DIFFEREN-TIAL POLARIZATION DEGREE IMAGE — S18

PARALLAX HISTOGRAM CALCULATOR 141 CALCULATES FREQUENCY DISTRIBUTION OF PARALLAXES BASED ON PARALLAX IMAGE — S12

RELIABILITY DETERMINATION UNIT 143 DETERMINES RELIA-BILITY OF PARALLAX IMAGE — S15

PARALLAX HISTOGRAM CALCULATOR 141 CALCULATES LINE PARALLAX DISTRIBUTION MAP BASED ON FREQUENCY DISTRIBUTION OF PARALLAXES — S13

PARALLAX HISTOGRAM CALCULATOR 141 DETECTS ROAD AREA BASED ON LINE PARALLAX DISTRIBUTION MAP — S14

DETERMINED RELIABILITY ≥ PREDETERMINED VALUE ? — S16

NO

ROAD AREA RECOGNITION UNIT 142 USES ROAD AREA DETECTED AT STEP S18 — S19

YES

ROAD AREA RECOGNITION UNIT 142 USES ROAD AREA DETECTED AT STEP S14 — S17

END

21

# FIG. 7A

PARALLAX IMAGE

| | | | | |
|---|---|---|---|---|
| 0 | 0 | 1 | 0 | 0 |
| 0 | 3 | 2 | 3 | 0 |
| 0 | 4 | 0 | 4 | 0 |
| 5 | 0 | 0 | 0 | 5 |

# FIG. 7B

V MAP

d (PARALLAX)

| 1 | 2 | 3 | 4 | 5 |
|---|---|---|---|---|
| 1 | 0 | 0 | 0 | 0 |
| 0 | 1 | 2 | 0 | 0 |
| 0 | 0 | 0 | 2 | 0 |
| 0 | 0 | 0 | 0 | 2 |

# FIG. 8

(a)

(b)

# FIG. 9

```
        ( START )
            │
            ▼
┌─────────────────────────┐
│ ACQUIRE LUMINANCE IMAGE │─── S21
│          DATA           │
└─────────────────────────┘
            │
            ▼
┌─────────────────────────┐
│  SET THRESHOLD VALUE OF │─── S22
│        LUMINANCE        │
└─────────────────────────┘
            │
            ▼
          ◇ S23
   ◇  ACQUIRED  ◇
NO ◇  LUMINANCE ≧  ◇
◄──◇   THRESHOLD  ◇
   ◇    VALUE ?   ◇
          │
         YES
          │
          ▼
        ◇ S24
   ◇ IS WIDTH ◇
NO ◇ OF LANE MARKER ◇
◄──◇ APPROPRIATE? ◇
          │
         YES
          │
          ▼
┌─────────────────────────┐
│  DETECT EDGES OF LANE   │─── S25
│         MARKER          │
└─────────────────────────┘
            │
            ▼
          ( END )
```

# FIG. 10

```
                    ( START )
                        │
                        ▼
        ┌───────────────────────────────────┐
        │ ACQUIRE DIFFERENTIAL POLARIZATION  │
        │ DEGREE IMAGE DATA AND LANE MARKER  │─ S31
        │        RECOGNITION RESULT          │
        └───────────────────────────────────┘
                        │
                        ▼
        ┌───────────────────────────────────┐
        │        SET THRESHOLD VALUE         │─ S32
        └───────────────────────────────────┘
                        │
                        ▼
        ┌───────────────────────────────────┐
        │      CALCULATE DIFFE  N DEGREE     │
        │ INSIDE LANE MARKER AND DIFFERENTIAL│─ S33
        │ POLARIZATION DEGREE IN THE SAME LINE│
        └───────────────────────────────────┘
                        │
                        ▼
                ╱─────────────────╲
               ╱     DIFFERENCE     ╲        S34
        NO    ╱     OF DIFFERENTIAL   ╲
     ┌───────  POLARIZATION DEGREES ≧  ───
     │        ╲       THRESHOLD       ╱
     │         ╲       VALUE ?       ╱
     │          ╲─────────────────╱
     │                   │ YES
     │                   ▼
     │        ┌───────────────────────────┐
     │        │   ABSTRACT ROAD END EDGE   │─ S35
     │        └───────────────────────────┘
     │                   │
     └──────────────────►│
                         ▼
                    ( END )
```

# FIG. 11

ROAD END

LANE MARKER

# FIG. 12

ROAD END

LANE MARKER

FIG. 14A

FIG. 14B

FIG. 13A

LANE MARKER

ROAD END

FIG. 13B

ROAD END

FIG. 16A

ROAD END

FIG. 16B

LANE MARKER

FIG. 15A

LANE MARKER

ROAD END

FIG. 15B

**REFERENCES CITED IN THE DESCRIPTION**

**Patent documents cited in the description**

- JP 2011085539 A